(19) Europäisches Patentamt
European Patent Office
Office européen des brevets

(11) EP 3 581 447 A1

(12) EUROPÄISCHE PATENTANMELDUNG

(43) Veröffentlichungstag:
18.12.2019 Patentblatt 2019/51

(51) Int Cl.:
B60T 13/04 (2006.01)          B60T 13/74 (2006.01)
F16D 65/18 (2006.01)

(21) Anmeldenummer: 19180050.7

(22) Anmeldetag: 13.06.2019

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 15.06.2018 DE 102018209694

(71) Anmelder: Hochschule für angewandte
Wissenschaften München
80335 München (DE)

(72) Erfinder:
• VILISOV, Andrej
84478 Waldkraiburg (DE)
• WOLFSTEINER, Peter
80797 München (DE)

(74) Vertreter: Hoefer & Partner Patentanwälte mbB
Pilgersheimer Straße 20
81543 München (DE)

(54) KRAFTÜBERTRAGUNGSVORRICHTUNG

(57) Die Erfindung betrifft eine Kraftübertragungsvorrichtung (1) aufweisend einen ersten Federenergiespeicher (2) und einen zweiten Federenergiespeicher (3), eine Koppeleinheit (4), die sowohl an den ersten Federenergiespeicher (2) und an den zweiten Federenergiespeicher (3) angebunden ist, wobei die Koppeleinheit (4) an eine erste Führung (5) und an eine zweite Führung (6) gekoppelt ist, wobei die erste Führung (5) und die zweite Führung (6) innerhalb jeweils einer Ebene angeordnet sind und nichtparallele Erstreckungsrichtungen aufweisen, dadurch gekennzeichnet, dass die Koppeleinheit (4) einen ersten Lagerblock (7) mit einer ersten Aufnahme (9) aufweist, in der ein Stab (11) der Koppeleinheit (4) gelagert ist, die Koppeleinheit (4) einen zweiten Lagerblock (8) mit einer zweiten Aufnahme (10) aufweist, in der der Stab (11) gelagert ist, die erste Aufnahme (9) und die zweite Aufnahme (10) eine kreisbogenförmige Kontur aufweisen, und eine Kontur des Stabs (11) einen ersten Kreisbogen (12) und einen zweiten Kreisbogen (13) aufweist, wobei der erster Kreisbogen (12) und der zweite Kreisbogen (13) verschiedene Kreismittelpunkte (100a, 100b) aufweisen.

Fig. 1

EP 3 581 447 A1

**Beschreibung**

Die vorliegende Erfindung betrifft eine Kraftübertragungsvorrichtung. Insbesondere dient die Kraftübertragungsvorrichtung zum Übertragen einer Kraft auf eine Bremseinrichtung. Die Erfindung betrifft außerdem eine Bremsanordnung umfassend eine Bremseinrichtung und eine Kraftübertragungsvorrichtung, wobei über die Kraftübertragungsvorrichtung die Bremseinrichtung aktuierbar ist.

Aus dem Stand der Technik ist eine Kraftübertragungsvorrichtung gemäß dem Oberbegriff des Anspruchs 1 insbesondere aus der DE 10 2015 219 626 A1 bekannt. Dieses Dokument offenbart eine Kraftübertragungsvorrichtung, bei der ein Hebelelement zwei Drehschubgelenke koppelt. Außerdem ist aus dem Stand der Technik die EP 0 644 358 B1 und die WO 2001/44677 A1 bekannt. Diese beiden Dokumente offenbaren Kurvenscheiben in Verbindung mit Rollen um Mechanismen mit reduzierter Betätigungs-, bzw. Eingangssteifigkeit bei gleicher Ausganssteifigkeit zu realisieren. Die Herstellung von Kurvenscheiben ist allerdings aufwändig, da das Profil eine komplexe mathematische Funktion darstellt, die deutlich von einem Kreis abweichen kann. Zusätzlich treten fertigungsbedingte Abweichungen auf, die zu Problemen bei der Kraftübertragung zwischen der Rolle und der Kurvenscheibe führen. Außerdem ist ein großer Bauraum notwendig.

Es ist Aufgabe der vorliegenden Erfindung eine Kraftübertragungsvorrichtung bereitzustellen, die bei einfacher und kostengünstiger Herstellung und Montage einen geringen Bauraum aufweist und ein zuverlässiges Speichern von einem vordefinierten Arbeitsvermögen ermöglicht.

Gelöst wird die Aufgabe durch die Merkmale des unabhängigen Anspruchs. Die Unteransprüche haben bevorzugte Weiterbildungen der Erfindung zum Inhalt.

Die erfindungsgemäße Kraftübertragungsvorrichtung weist insbesondere einen geringen Bauraumbedarf auf und ermöglicht eine hohe Tragfähigkeit. Dazu umfasst die Kraftübertragungsvorrichtung einen ersten Federenergiespeicher und einen zweiten Federenergiespeicher. Außerdem umfasst die Kraftübertragungsvorrichtung eine Koppeleinheit, die sowohl an den ersten Federenergiespeicher als auch an den zweiten Federenergiespeicher angebunden ist. Die Koppeleinheit ist außerdem an eine erste Führung und an eine zweite Führung gekoppelt. Die erste Führung und die zweite Führung sind jeweils innerhalb einer Ebene angeordnet und weisen nicht parallele Erstreckungsrichtungen auf. Besonders vorteilhaft sind die Erstreckungsrichtungen senkrecht zueinander orientiert. Ebenso sind die ersten Federenergiespeicher bevorzugt derart angeordnet, dass eine Beladungsrichtung oder Entladungsrichtung des ersten Federenergiespeichers senkrecht zu einer Beladungsrichtung oder Entladungsrichtung des zweiten Federenergiespeichers orientiert ist. Erfindungsgemäß ist außerdem vorgesehen, dass die Koppeleinheit einen ersten Lagerblock und einen zweiten Lagerblock aufweist. Der erste Lagerblock umfasst eine erste Aufnahme für einen Stab, während der zweite Lagerblock eine zweite Aufnahme für denselben Stab aufweist. Der Stab ist somit an der ersten Aufnahme und an der zweiten Aufnahme gelagert. Dabei ist vorgesehen, dass sowohl die erste Aufnahme als auch die zweite Aufnahme eine kreisbogenförmige Kontur aufweisen. Die Kontur des Stabs umfasst einen ersten Kreisbogen und einen zweiten Kreisbogen. Dabei ist vorgesehen, dass der erste Kreisbogen und der zweite Kreisbogen verschiedene Kreismittelpunkte aufweisen. Besonders vorteilhaft weist der Stab eine Kontur mit zwei konstanten Radien auf. Insbesondere hat der Stab die Form zweier Halbkreise, die tangential über zwei endliche Geradenabschnitte verbunden sind. Durch das Zusammenspiel von erstem Lagerblock, Stab und zweitem Lagerblock ist ein Drehschubgelenk realisiert. Insbesondere kann der erste Lagerblock senkrecht zu dem zweiten Lagerblock oder der zweite Lagerblock senkrecht zu dem ersten Lagerblock bewegt werden, wobei durch den Stab stets eine Verbindung zwischen der ersten Aufnahme und der zweiten Aufnahme verbleibt. Insbesondere ist besagte Verbindung kraftschlüssig. Durch eine derartige Ausgestaltung der Koppeleinheit ist einerseits erreicht, dass ein geringer Bauraum vorhanden ist. Andererseits ist die Tragfähigkeit der Koppeleinheit maximiert.

Der Stab ist bevorzugt an demjenigen Bereich der Kontur mit dem ersten Kreisbogen in der ersten Aufnahme gelagert. Besonders vorteilhaft ist diese Lagerung über eine erste Wälzkörperanordnung realisiert. An demjenigen Bereich der Kontur des Stabs mit dem zweiten Kreisbogen ist der Stab in der zweiten Aufnahme, bevorzugt über eine zweite Wälzkörperanordnung, gelagert. Somit ist eine Rotation des Stabs bezüglich der ersten Aufnahme und zweiten Aufnahme ermöglicht. Dies führt zur Möglichkeit einer Verschiebung von erstem Lagerblock und zweiten Lagerblock senkrecht zueinander. Durch die Lagerung des Stabs in der ersten Aufnahme und der zweiten Aufnahme ist eine hohe Tragfähigkeit bei gleichzeitig geringer Abmessung der Kraftübertragungsvorrichtung erreicht.

Eine erste Außenwand des ersten Lagerblocks ist bevorzugt mit dem ersten Federenergiespeicher gekoppelt. Alternativ oder zusätzlich ist vorgesehen, dass eine zweite Außenwand des zweiten Lagerblocks mit dem zweiten Federenergiespeicher gekoppelt ist. Aufgrund der ersten Führung und der zweiten Führung ist dabei insbesondere eine Bewegungsrichtung der ersten Außenwand und der zweiten Außenwand festgelegt. Damit lässt sich insbesondere erreichen, dass die Kraftübertragungsvorrichtung die Federenergiespeicher knicksicher beladen oder entladen kann. Dies ermöglicht insbesondere die Federenergiespeicher ohne zusätzliche Führungen bereitzustellen, da aufgrund einer Vermeidung einer tangentialen Bewegung zwischen Federenergiespeicher und Lagerblock, sowie der Vermeidung der Drehung des Lagerblocks ein Risiko eines Ausknickens der Federenergiespeicher aufgrund ihrer Lagerung minimiert ist.

Die erste Führung weist bevorzugt eine erste Führungsleiste auf. Die erste Führungsleiste dient zum Lagern einer dritten Außenwand des ersten Lagerblocks. Dieses Lagern erfolgt insbesondere über eine dritte Wälzkörperanordnung. Weiterhin ist vorgesehen, dass die zweite Führung eine zweite Führungsleiste zum Lagern, insbesondere über eine vierte Wälzkörperanordnung, einer vierten Außenwand des Lagerblocks aufweist.

Insbesondere sind die erste Außenwand und/oder die zweite Außenwand und/oder die dritte Außenwand und/oder die vierte Außenwand verschiedene Flächen.

Die Kraftübertragungsvorrichtung weist bevorzugt einen dritten Federenergiespeicher auf. Der dritte Federenergiespeicher ist mit der Koppeleinheit gekoppelt und wirkt dem zweiten Federenergiespeicher entgegen. Alternativ kann der dritte Federenergiespeicher auch mit dem zweiten Federenergiespeicher zusammenwirken. Durch die Verwendung des dritten Federenergiespeichers ist insbesondere ermöglicht, ein Lüftspiel einer Bremseinrichtung auszugleichen.

In einer weiteren bevorzugten Ausführungsform der Erfindung ist vorgesehen, dass zumindest ein Scheibenelement drehfest an einer Stirnseite des Stabs angebracht ist. Das Scheibenelement ist somit nicht von der ersten Aufnahme oder der zweiten Aufnahme gelagert. Vielmehr ist vorgesehen, dass das Scheibenelement über eine Außenfläche mit einer Schulter des zweiten Lagerblocks zusammenwirkt. Somit ist insbesondere eine zusätzliche Aufnahme erreicht. Das Scheibenelement ist dabei derart ausgebildet, dass die Außenfläche eine erste Kreisbogenkontur mit demselben Kreismittelpunkt wie der erste Kreisbogen der Stabkontur aufweist. An einem Übergangspunkt geht die erste Kreisbogenkontur in eine zweite Kreisbogenkontur über. Die zweite Kreisbogenkontur ist insbesondere mit einem Radius ausgebildet, der geringer ist als der Radius der ersten Kreisbogenkontur. Die Außenfläche ist über die erste Kreisbogenkontur an die Schulter anlegbar und durch die zweite Kreisbogenkontur von der Schulter trennbar. Somit stellt der Übergangspunkt einen solchen Punkt dar, an dem das Scheibenelement einen Grenzzustand zwischen Kontakt zur Schulter und keinem Kontakt zur Schulter aufweist. Der Übergangspunkt gelangt dann in Kontakt zu der Schulter, wenn der erste Federenergiespeicher maximal gespannt ist. Auf diese Weise ist ein Ausgleich von Lüftspiel ermöglicht. So ist insbesondere erreicht, dass in dem Zustand, in dem der erste Federenergiespeicher maximal gespannt ist, ein weiteres Bewegen des zweiten Lagerblocks ermöglicht ist, wobei der erste Lagerblock unbeweglich bleibt. Durch das Anlegen der ersten Kreisbogenkontur an der Schulter erfolgt eine Rotation des Scheibenelements und damit des Stabs allein um den Kreismittelpunkt der ersten Kreisbogenkontur. Wäre das Scheibenelement nicht vorhanden, so würde der maximal gespannte Zustand des ersten Federenergiespeichers einen Endpunkt einer Bewegbarkeit der Koppeleinheit darstellen. Allerdings ist durch die Verwendung des Scheibenelements ermöglicht, den zweiten Lagerblock über die Endstellung hinaus weiter zu bewegen, wobei der erste Lagerblock nicht bewegt wird. Auf diese Weise kann das Lüftspiel der Bremseinrichtung wie zuvor beschrieben ausgeglichen werden.

Der zweite Lagerblock ist vorteilhafterweise über ein erstes Drehschubgelenk mit einem ersten Anschluss eines Hebelelements gekoppelt. Eine Bremseinrichtung ist über ein zweites Drehschubgelenk mit einem zweiten Anschluss des Hebelelements koppelbar. Ein Lagerpunkt des Hebelelements ist entlang des Hebelelements verstellbar. Dies führt dazu, dass eine Übersetzung zwischen der Koppeleinheit und der Bremseinrichtung verändert werden kann. Somit ist insbesondere ermöglicht, ein Nachstellen zu realisieren, das aufgrund eines zunehmenden Verschleißes von Bremsbacken der Bremseinrichtung notwendig sein kann. Besonders vorteilhaft erfolgt ein Verschieben des gesamten Hebelelements relativ zu der Koppeleinheit, insbesondere relativ zu dem zweiten Lagerblock, und der Bremseinrichtung. Durch das erste Drehschubgelenk und das zweite Drehschubgelenk ist allerdings jederzeit eine zuverlässige Anbindung an das Hebelelement ermöglicht.

Besonders vorteilhaft sind der erste Anschluss und der zweite Anschluss auf unterschiedlichen Seiten des Hebelelements angebracht. Außerdem ist bevorzugt vorgesehen, dass der Lagerpunkt zwischen dem ersten Anschluss und dem zweiten Anschluss angebracht ist. In einer Alternative ist der erste Anschluss zusammen mit dem zweiten Anschluss auf einer gleichen Seite des Hebelelements und damit auf einer gleichen Seite hinsichtlich des Lagerpunkts angebracht. Unabhängig von den beschriebenen Ausgestaltungen ist in jedem Fall eine Übersetzung aufgrund des Hebels gegeben. Durch die unterschiedlichen Ausgestaltungen ist außerdem eine Bewegungsrichtung, entlang derer die Bremseinrichtung zu aktuieren ist, frei wählbar.

Bevorzugt umfasst die Kraftübertragungsvorrichtung einen Aktuator. Der Aktuator dient zum Bewegen der Koppeleinheit, wobei der Aktuator besonders vorteilhaft mit dem zweiten Lagerblock gekoppelt ist. Durch den Aktuator kann insbesondere ein Benutzer eine Bremsung einleiten. Durch den ersten Federenergiespeicher und den zweiten Federenergiespeicher kann dabei die Kraft, die der Aktuator auf den zweiten Lagerblock ausübt, verhältnismäßig gering sein. Die Kraftübertragungsvorrichtung kann damit insbesondere als Bremskraftverstärker dienen.

Die Erfindung betrifft außerdem eine Bremsanordnung. Die Bremsanordnung umfasst eine Bremseinrichtung, wobei die Bremseinrichtung insbesondere eine Scheibenbremse darstellt. Die Bremseinrichtung umfasst vorteilhafterweise eine Bremsscheibe sowie Bremsbacken, die auf die Bremsscheibe einwirken können. Die Bremseinrichtung ist durch Aufprägen einer Kraft betreibbar und ist insbesondere mit einer Kraftübertragungsvorrichtung wie zuvor beschrieben gekoppelt. Die Bremseinrichtung kann somit durch die Kraftübertragungsvorrichtung aktuiert werden.

Weitere Einzelheiten, Vorteile und Merkmale der vorliegenden Erfindung ergeben sich aus nachfolgender

EP 3 581 447 A1

Beschreibung von Ausführungsbeispielen anhand der Zeichnung. Es zeigt:

Fig. 1      eine schematische Abbildung einer Kraftübertragungsvorrichtung gemäß einem Ausführungsbeispiel der Erfindung,

Fig. 2a     eine schematische Abbildung der Kraftübertragungsvorrichtung gemäß dem Ausführungsbeispiel der Erfindung in einer ersten Alternative,

Fig. 2b     eine erste modellhafte Wiedergabe der Kraftübertragungsvorrichtung aus Fig. 2a,

Fig. 2c     eine zweite modellhafte Wiedergabe der Kraftübertragungsvorrichtung aus Fig. 2a,

Fig. 2d     eine dritte modellhafte Wiedergabe der Kraftübertragungsvorrichtung aus Fig. 2a,

Fig. 3      eine schematische Ansicht der Kraftübertragungsvorrichtung 1 gemäß dem Ausführungsbeispiel der Erfindung einer zweiten Alternative,

Fig. 4a     eine schematische Ansicht der Kraftübertragungsvorrichtung 1 aus Fig. 3 in einer ersten Stellung,

Fig. 4b     eine schematische Darstellung der Kraftübertragungsvorrichtung aus Fig. 3 in einer zweiten Stellung,

Fig. 4c     eine schematische Darstellung der Kraftübertragungsvorrichtung aus Fig. 3 in einer dritten Stellung,

Fig. 5      eine schematische Ansicht einer Bremsanordnung gemäß einem ersten Ausführungsbeispiel der Erfindung,

Fig. 6      eine schematische Ansicht eines Teilbereichs der Bremsanordnung gemäß dem ersten Ausführungsbeispiel einer alternativen Ausgestaltung, und

Fig. 7      eine schematische Darstellung einer Bremsanordnung gemäß einem zweiten Ausführungsbeispiel der Erfindung.

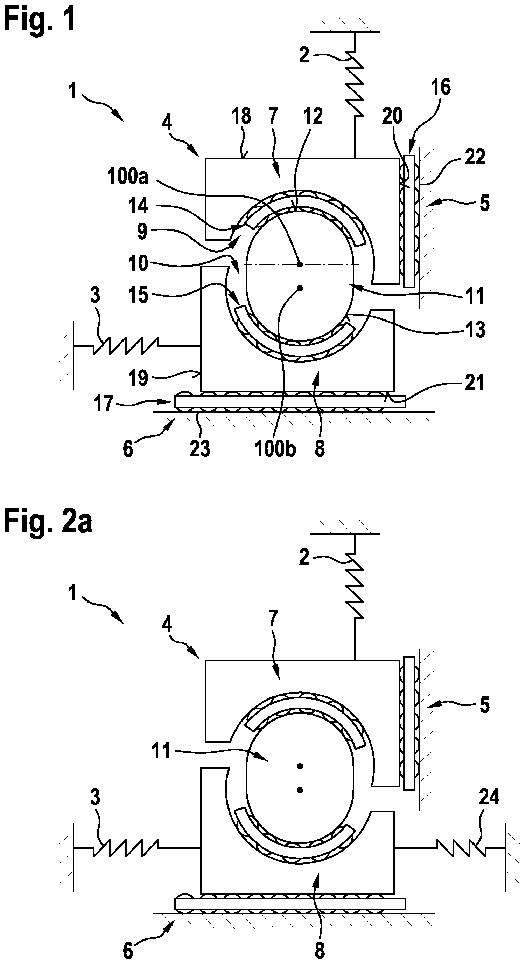

Fig. 1 zeigt schematisch eine Kraftübertragungsvorrichtung 1 gemäß einem Ausführungsbeispiel der Erfindung. Die Kraftübertragungsvorrichtung 1 umfasst einen ersten Federenergiespeicher 2 sowie einen zweiten Federenergiespeicher 3. Die Federenergiespeicher 2, 3 sind insbesondere Druckfedern und/oder Modelle für Bremsbeläge oder Gehäuseanbindungen, die senkrecht zueinander orientiert sind. Beide Federenergiespeicher 2, 3 sind mit einer Koppeleinheit 4 gekoppelt. So ist der erste Federenergiespeicher 2 mit einer ersten Außenwand 18 der Koppeleinheit 4 verbunden. Der zweite Federenergiespeicher 3 ist mit einer zweiten Außenwand 19 der Koppeleinheit 4 verbunden.
Die Koppeleinheit 4 umfasst einen ersten Lagerblock 7 und einen zweiten Lagerblock 8. Der erste Lagerblock 7 weist neben der ersten Außenwand 18 auch eine dritte Außenwand 20 auf, über die der erste Lagerblock 7 an einer ersten Führung 5 geführt ist. Der zweite Lagerblock 8 weist neben der zweiten Außenwand 19 eine vierte Außenwand 21 auf, über die der zweite Lagerblock 8 an einer zweiten Führung 6 geführt ist.
Die erste Führung 5 umfasst eine erste Führungsleiste 22. Die zweite Führung 6 umfasst eine zweite Führungsleiste 23. Die Erstreckungsrichtungen von erster Führungsleiste und zweiter Führungsleiste sind vorteilhafterweise senkrecht zueinander, in jedem Fall nicht parallel angeordnet.
Wie in Fig. 1 gezeigt ist lässt sich somit der erste Lagerblock 7 ausschließlich in einer vertikalen Richtung bewegen, während der zweite Lagerblock 8 ausschließlich in einer horizontalen Richtung bewegt werden kann. Dies wird durch die erste Führung 5 und durch die zweite Führung 6 sichergestellt.
Die Koppeleinheit 4 weist außerdem einen Stab 11 auf, der zum kraftschlüssigen Koppeln von erstem Lagerblock 7 und zweitem Lagerblock 8 ausgebildet ist. Der Stab 11 weist insbesondere eine Form eines Langlochs auf, sodass sich der Stab 11 zwischen zwei Abrundungen erstreckt. Insbesondere umfasst der Stab 11 eine Kontur mit einem ersten Kreisbogen 12 und einem zweiten Kreisbogen 13 auf. Dabei ist vorgesehen, dass ein Kreismittelpunkt 100a des ersten Kreisbogens 12 unterschiedlich von einem Kreismittelpunkt 100b des zweiten Kreisbogens 13 ausgebildet ist. Besonders vorteilhaft sind der erste Kreisbogen und der zweite Kreisbogen tangential durch zwei parallele, endliche Geradenabschnitte verbunden.
Zur Aufnahme des Stabs 11 weist der erste Lagerblock 7 eine erste Aufnahme 9 auf. Der zweite Lagerblock 8 weist eine zweite Aufnahme 10 auf. Die erste Aufnahme 9 ist bevorzugt komplementär zu der Kontur des Stabs mit dem ersten Kreisbogen 12 ausgebildet. Die zweite Aufnahme 10 ist bevorzugt komplementär zu der Kontur des Stabs 11 mit dem zweiten Kreisbogen 13 ausgebildet.

4

Um eine effektive Lagerung vorzusehen, ist insbesondere eine erste Wälzkörperanordnung 14 zwischen dem Stab 11 und der ersten Aufnahme 9 angebracht. Ebenso ist eine zweite Wälzkörperanordnung 15 zwischen zweiter Aufnahme 10 und Stab 11 angeordnet. Bei der ersten Wälzkörperanordnung 14 und der zweiten Wälzkörperanordnung 15 handelt es sich insbesondere um Wälzkörper, die von einem Wälzkörperkäfig gehalten sind. Der Wälzkörperkäfig ist insbesondere komplementär zu dem ersten Kreisbogen 12 oder dem zweiten Kreisbogen 13 geformt.

Außerdem ist eine dritte Wälzkörperanordnung 16 vorgesehen, die zwischen der dritten Außenwand 20 und der Führungsleiste 22 angebracht ist, um den ersten Lagerblock 7 effektiv an der ersten Führung 5 zu lagern. Eine vierte Wälzköperanordnung 17 ist zwischen der zweiten Führungsleiste 23 und der vierten Außenwand 21 des zweiten Lagerblocks 8 angebracht. Somit dient auch die vierte Wälzkörperanordnung 17 zum optimalen Lagern des zweiten Lagerblocks 8 an der zweiten Führung 6.

Wird der zweite Lagerblock 8 entlang der zweiten Führung 6 verschoben, so erfolgt ein Rotieren des Stabs 11 sowohl um den Kreismittelpunkt 100a des ersten Kreisbogens 12 als auch um den Kreismittelpunkt 100b des zweiten Kreisbogens 13. Dies führt zu einer Kopplung der Bewegung des zweiten Lagerblocks 8 mit dem ersten Lagerblock 7. Somit führ die Bewegung des zweiten Lagerblocks 8 aufgrund des Stabs 11 ebenfalls zu einer Bewegung des ersten Lagerblocks 7.

Aufgrund der Verwendung der beiden Lagerblöcke 7, 8 und des Stabs 11 ist ein kompakter Aufbau der Koppeleinheit 4 erreicht. Gleichzeitig ist außerdem eine hohe Traglast sichergestellt.

Eine Länge des Stabs 11, insbesondere ein Abstand der Kreismittelpunkte 100a, 100b, soll möglichst unabhängig von dem Radius des ersten Kreisbogens 12 und des zweiten Kreisbogens 13 veränderbar sein. An die Breite und den Radius der ersten Aufnahme 9 und der zweiten Aufnahme 10 ist die Tragfähigkeit der Wälzkörperanordnungen gebunden. Durch die Entkopplung ist die Erhöhung der Tragfähigkeit bei gleichbleibender Länge des Stabs 11 ermöglicht. So kann ein geringer Hub in Verbindung mit einer hohen Tragfähigkeit eingestellt werden. Eine höhere Tragfähigkeit kann bei den Wälzkörperanordnungen durch einen größeren Radius der Wälzkörper und/oder des ersten Kreisbogens 12 sowie zweiten Kreisbogens 13 erreicht werden. Durch die Entkopplung wird die Anwendung von nicht schlanken Druckfedern möglich, die hohe übertragbare Kräfte bei einem geringen Hub aufweisen, zum Beispiel Schraubendruckfedern, Tellerfedersäulen, Tellerfederstapel, Schraubentellerfedern, usw. Alle diese Typen von Druckfedern können für den ersten Federenergiespeicher 2 und/oder den zweiten Federenergiespeicher 3 verwendet werden. Bei einem geringen Hub und hohen Kräften sind die Federenergiespeicher 2, 3 kompakt ausgebildet und dadurch knicksicher. Außerdem ist ein Verhältnis von Arbeitsvermögen zu Einbauvolumen optimiert.

Durch die erste Führung 5 und die zweite Führung 6 sind die erste Außenwand 18 und die zweite Außenwand 19 nicht drehbar und bewegen sich insbesondere ausschließlich tangential zur Federachse des ersten Federenergiespeichers 2 und des zweiten Federenergiespeichers 3. Dadurch ist eine Federlagerung mit geringer Knickneigung realisiert. Dies ist insbesondere vorteilhaft, da für die Federenergiespeicher 2, 3 keine zusätzlichen Führungen benötigt werden, um eine möglicherweise knickende Feder in ihrer eigentlichen Position zu halten. Somit ist die Kraftübertragungsvorrichtung 1 einfach und aufwandsarm herstellbar, wobei insbesondere zusätzlicher Bauraum eingespart und ein Gesamtgewicht verringert werden kann.

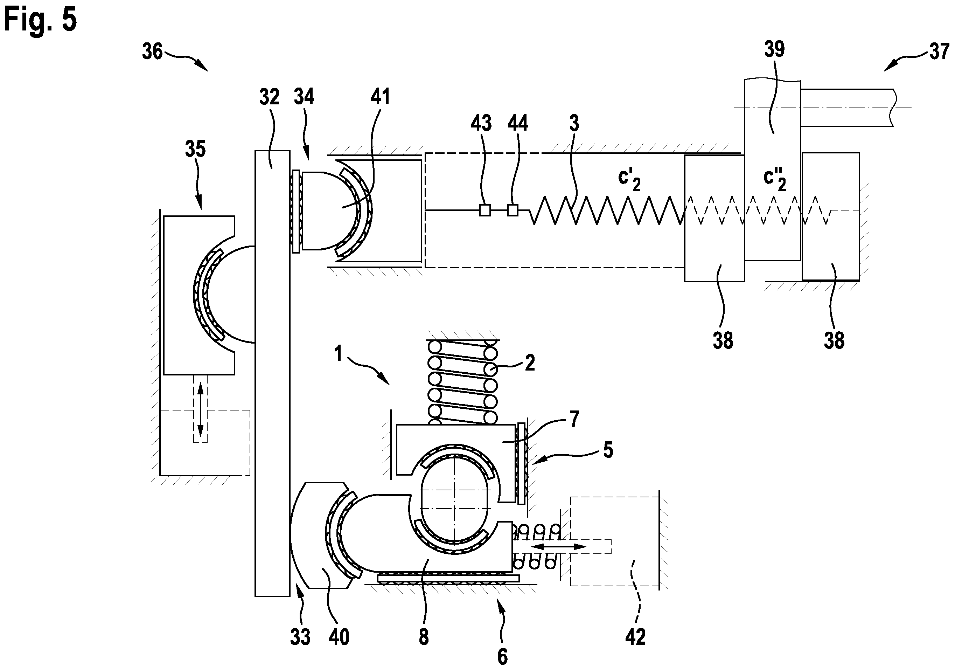

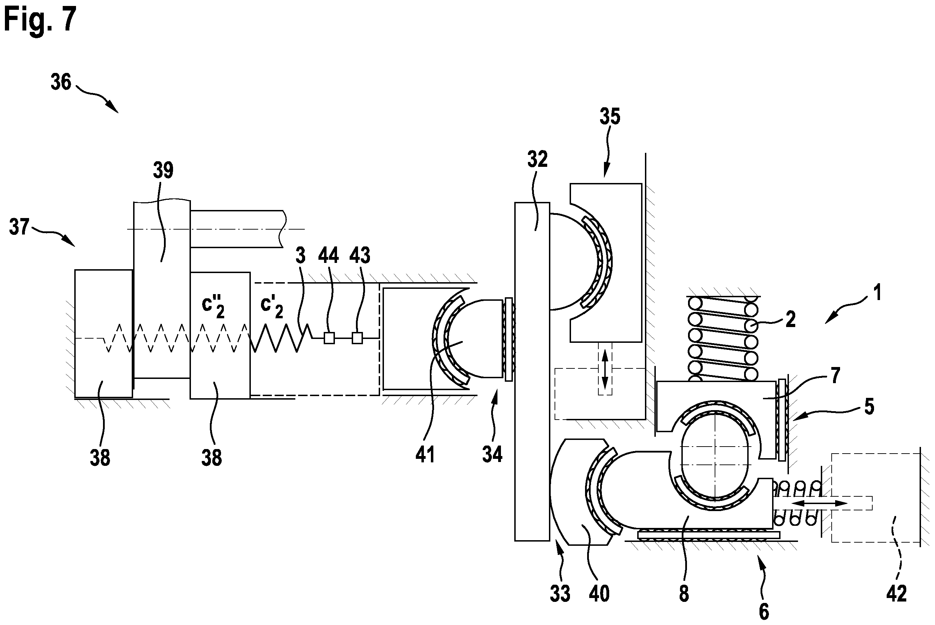

Außerdem können steife Federn als erster Federenergiespeicher 2 und/oder zweiter Federenergiespeicher 3 verwendet werden, die bei hohen zulässigen Federkräften einen kurzen Hub aufweisen. Durch eine erhöhte Steifigkeit des ersten Federenergiespeichers 2 und zweiten Federenergiespeichers 3 sowie der Koppeleinheit 4 kann eine Hebelübersetzung (vgl. nachfolgende Figuren 5 und 7) geringer werden oder ganz entfallen.

Innerhalb des Bremsvorgangs müssen viele Bauteile innerhalb des Bremssattels verformt werden, bis die notwendige Spannkraft erreicht ist. Die Verformung ist immer vorhanden, da die Bauteile elastisch sind. Deswegen muss bei jedem Bremsvorgang eine Deformationsarbeit erbracht werden. Da die Bremsung schnell erfolgen soll, wird die notwendige Betätigungsleistung groß. Das Ziel ist es diese Leistung zu verringern.

Dazu soll die besagte Deformationsarbeit im ersten Federenergiespeicher 2 vorgehalten werden und bei Bedarf auf den Bremssattel übertragen werden. Dadurch wird sich die notwendige Arbeit vom Aktuator verringern. Um den gewünschten Arbeitsaustausch zwischen dem ersten Federenergiespeicher 2 und den elastischen Bauteilen vom Bremssattel zu ermöglichen wird die Koppeleinheit 4 benötigt.

Die Koppeleinheit 4 ermöglicht einen vollständigen Arbeitsaustausch zwischen linearen Federn gleicher Steifigkeit. Es gilt folgende Bedingungen zu beachten: Erstens die Deformationsarbeit soll vorgehalten werden, deswegen muss der erste Federenergiespeicher 2 vor der ersten Bremsung einmalig aufgeladen werden. Zweitens, wenn der Arbeitsaustausch möglichst vollständig sein soll, müssen alle relevanten Steifigkeiten zur Erzeugung der Spannkraft innerhalb des Bremssattels berücksichtigt werden. Um diese Bedingungen zu erreichen, ist der hier vorgestellte Bremssattel wie folgt funktional aufgebaut:

Der erste Federenergiespeicher 2 speichert die notwendige Deformationsarbeit und der zweite Federenergiespeicher 3 bringt die resultierende Steifigkeit der Bauteile $c_2$ auf den Wert des ersten Federenergiespeichers 2. Die Koppeleinheit 4 ermöglicht schließlich den vollständigen Arbeitsaustausch.

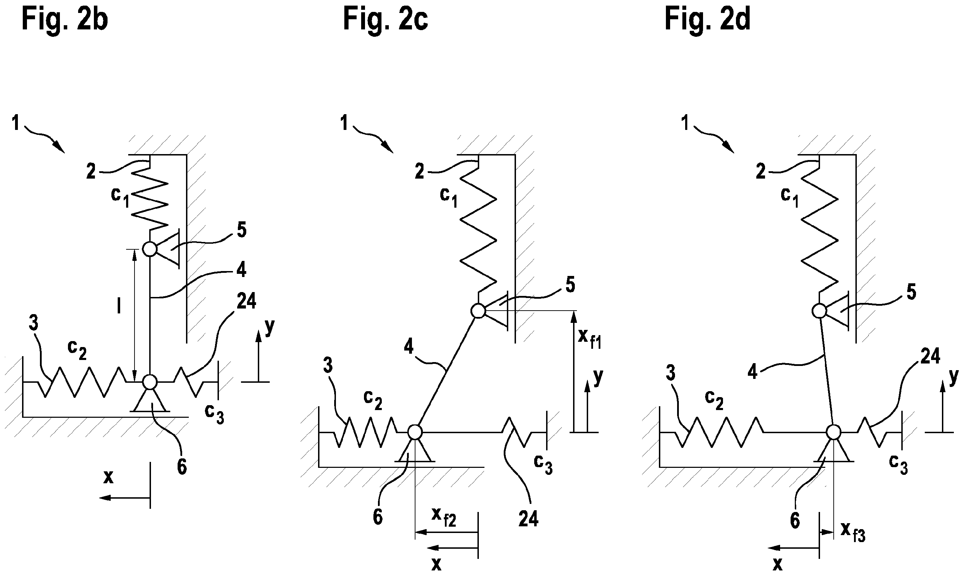

Fig. 2 zeigt eine schematische Abbildung, wie durch eine zusätzliche Feder, die einen dritten Federenergiespeicher 24 darstellt, ein Lüftspielausgleich erfolgen kann. Ein Lüftspiel ist bei Bremseinrichtungen immer dann vorhanden, wenn ein Abstand zwischen Bremsscheibe und Bremsbacke vorliegt. Die Kraftübertragungsvorrichtung 1 ermöglicht dieses Lüftspiel auszugleichen.

Fig. 2a zeigt eine schematische Abbildung der Kraftübertragungsvorrichtung 1 wie in Fig. 1 dargestellt, wobei zusätzlich der dritte Federenergiespeicher 24 vorhanden ist. Die Figuren 2b, 2c und 2d zeigen eine modellhafte Wiedergabe der Kraftübertragungsvorrichtung 1.

Die Federenergiespeicher 2, 3, 24 sind linear elastisch, wobei der erste Federenergiespeicher 2 die Federkonstante $c_1$, der zweite Federenergiespeicher 3 die Federkonstante $c_2$ und der dritte Federenergiespeicher 24 die Federkonstante $c_3$ aufweist. Die Einzelenergie berechnet sich nach der folgenden Gleichung:

$$E_{einzel} = 0{,}5 * c_{einzel} * x^2_{f,einzel}$$

Es ist dabei insbesondere vorgesehen, dass die Steifigkeiten des ersten Federenergiespeichers 2, des zweiten Federenergiespeichers 3 und des dritten Federenergiespeichers 24 allesamt gleich sind:

$$c_1 = c_2 = c_3 = c; c_2 = \frac{1}{\frac{1}{c'_2} + \frac{1}{c''_2}}$$

Der zweite Federenergiespeicher 3 repräsentiert insbesondere eine Reihenschaltung aus eigentlichem Federenergiespeicher mit elastischen Bremsbacken, einer elastischen Bremsscheibe und einem elastischem Gehäuse. Um eine möglichst hohe Reduktion der notwendigen Betätigungskraft zu erreichen ist die Steifigkeit $c_1$ des ersten Federenergiespeicher 2 insbesondere gleich der Steifigkeit $c_2$ und der Steifigkeit $c_3$. Die Steifigkeit $c_2$ des zweiten Federenergiespeichers 3 ist hierbei insbesondere die Ersatzsteifigkeit aus der Reihenschaltung des Energiespeichers $c_2'$ und der Gesamtsteifigkeit $c_2''$ von Bremsbacken 38, der Bremsscheibe 39 und des Gehäuses (vgl. Fig. 5).

Die Gesamtenergie berechnet sich damit nach der folgenden Gleichung:

$$E = 0{,}5 * [c_1 * x^2_{f1} + c_2 * x^2_{f2} + c_3 * x^2_{f3}]$$

Ein kinematischer Zusammenhang zwischen der Bewegung des ersten Kreismittelpunktes 100a des Stabes 11 entlang der senkrechten Führung y und der Bewegung des zweiten Kreismittelpunktes 100b des Stabes 11 entlang der waagrechten Führung x lautet:

$$y = \sqrt{l^2 - x^2}$$

Des Weiteren ist vorgesehen, dass der erste Federenergiespeicher 2 gespannt wird, sobald der Stab 11 die waagrechte Lage verlässt, in der die beiden Kreismittelpunkte 100a, 100b auf einer waagerecht orientierten Linie angeordnet sind. Gleichzeitig bewegt sich das obere Ende des Stabs 11 nach oben. Damit gilt der folgende Zusammenhang:

$$x_{f1} = \begin{Bmatrix} 0 & für\ y < 0 \\ y & für\ y > 0 \end{Bmatrix}$$

Der zweite Federenergiespeicher 3 wird nur gespannt, wenn sich das untere Ende des Stabs 11 aus der senkrechten Lage nach links bewegt. Die Verschiebung des unteren Stabendes und die Einfederung $x_{f2}$ des zweiten Federenergiespeichers bestimmt sich dann wie folgt:

$$x_{f2} = \begin{Bmatrix} 0 & für\ x < 0 \\ x & für\ x > 0 \end{Bmatrix}$$

Schließlich wird der dritte Federenergiespeicher 24 nur dann gespannt, wenn sich das untere Ende des Stabs 11 aus der senkrechten Lage nach rechts bewegt und die Verschiebung des unteren Endes des Stabs 11 und die Einfederung $x_{f3}$ des dritten Federenergiespeichers 24 bestimmt sich nach folgender Formel:

$$x_{f3} = \begin{cases} x & f\ddot{u}r\ x < 0 \\ 0 & f\ddot{u}r\ x > 0 \end{cases}$$

Somit ergibt sich die Gesamtenergie nach der folgenden Formel, wobei nach dem Vorzeichen von x zu unterscheiden ist:

$$E_{ges} = \begin{cases} 0{,}5 * \left[ c_1 * \left( \sqrt{l^2 - x^2} \right)^2 + c_1 * 0^2 + c_1 * x^2 \right] & f\ddot{u}r\ x < 0 \\ 0{,}5 * \left[ c_1 * \left( \sqrt{l^2 - x^2} \right)^2 + c_1 * x^2 + c_1 * 0^2 \right] & f\ddot{u}r\ x > 0 \end{cases} = \begin{cases} c * l^2 & f\ddot{u}r\ x < 0 \\ c * l^2 & f\ddot{u}r\ x > 0 \end{cases}$$

Die Gesamtenergie ist zu jeder Stellung des Stabes 11 konstant, weswegen keine externe Kraft benötigt wird, um den Stab 11 zu bewegen. Der zweite Federenergiespeicher 3 kann allerdings ein Spiel aufweisen, das insbesondere durch ein Lüftspiel einer Bremseinrichtung entsteht. Dieses Spiel hat keinen negativen Einfluss auf die Energiebilanz, solange das Spiel dieses Federenergiespeichers im negativen Bereich von x angeordnet ist. Dadurch kann eine elastische Deformationsarbeit einer linear-elastischen Struktur, die hier insbesondere durch den zweiten Federenergiespeicher 3 dargestellt ist, beibehalten werden, selbst wenn ein Spiel auftritt. Das Spiel kann insbesondere durch den dritten Federenergiespeicher 24 ausgeglichen werden.

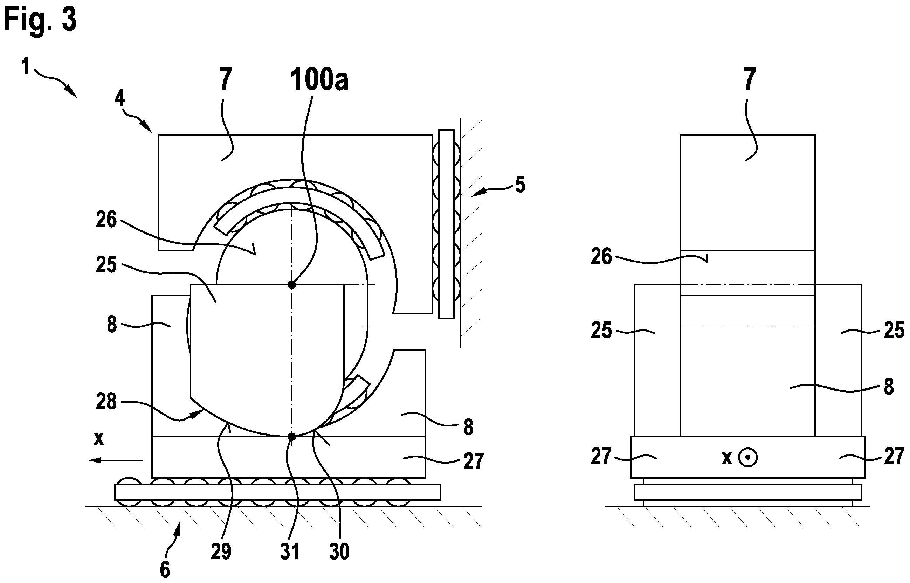

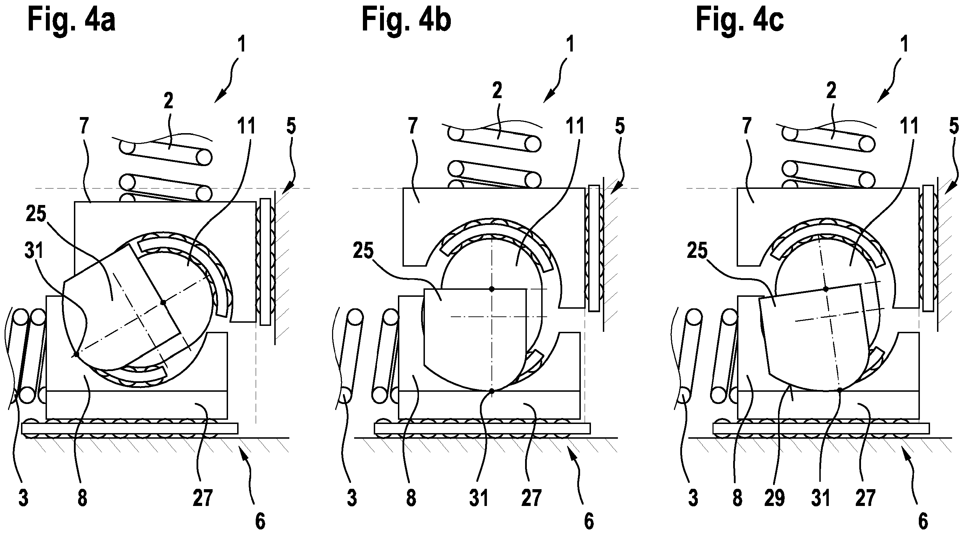

Die Figuren 3 und 4 zeigen eine alternative Möglichkeit des Ausgleichs des Lüftspiels. Dazu ist an einer Kraftübertragungsvorrichtung 1 wie in Fig. 1 gezeigt zusätzlich ein Scheibenelement 25 an einer Stirnseite 26 des Stabs 11 angebracht. Wie aus Fig. 3 ersichtlich sind zwei Scheibenelemente 25 vorhanden, wobei je ein Scheibenelement 25 an einer der Stirnflächen 26 des Stabs 11 angebracht ist. Durch die Scheibenelemente 25 ist eine zusätzliche Kinematik in die Kraftübertragungsvorrichtung 1 eingebracht. Dies ist insbesondere dadurch erreicht, dass die Scheibenelemente 25 nicht von der ersten Aufnahme 9 oder der zweiten Aufnahme 10 gelagert werden. Vielmehr ist eine zusätzliche Schulter 26 des zweiten Lagerblocks 8 vorhanden, an dem eine Außenfläche 28 des Scheibenelements 25 anliegen kann.

Die Außenfläche 28 weist eine erste Kreisbogenkontur 29 sowie eine zweite Kreisbogenkontur 30 auf. Die erste Kreisbogenkontur 29 geht an einem Übergangspunkt 31 in die zweite Kreisbogenkontur 30 über. Außerdem ist vorgesehen, dass die erste Kreisbogenkontur 29 denselben Kreismittelpunkt 100a wie der erste Kreisbogen 12 aufweist. Es ist außerdem vorgesehen, dass die Scheibenelemente 25 nur über die erste Kreisbogenkontur 29 an der Schulter 27 anliegen können. Die zweite Kreisbogenkontur 30 ist unabhängig von einer Stellung des Stabs 11 jederzeit von der Schulter 27 beabstandet.

Die Figuren 4a, 4b und 4c zeigen verschiedene Stellungen des Stabs 11 und die zugehörigen Stellungen der Scheibenelemente 25. Sobald das untere Ende des Stabs 11 aus der senkrechten Position des Stabs 11 in die positive X-Richtung ausfährt, gelangt die zusätzliche Kinematik durch die Scheibenelemente 25 zum Einsatz. In der zuvor beschriebenen senkrechten Stellung ist eine Position erreicht, in der der Übergangspunkt 31 an der Schulter 27 anliegt. Dieser Fall ist in Fig. 4b gezeigt. In Fig. 4a ist der zweite Lagerblock 8 in positiver X-Richtung verschoben. In diesem Fall ist kein Kontakt zwischen Scheibenelement 25 und Schulter 27 vorhanden. Somit haben die Scheibenelemente 25 in dieser Stellung keinerlei Einfluss. Erfolgt hingegen ein Verschieben des zweiten Lagerblocks 8 in negativer X-Richtung, so tritt die in Fig. 4c gezeigte Stellung ein. Hierbei ist ein Kontakt zwischen der Außenfläche 28 der Scheibenelemente 25 und der Schulter 27 vorhanden. Somit erfolgt ein Ableiten einer Last von dem Stab 11 auf den zweiten Lagerblock 8 über die Schulter 27. Durch das Verschieben des zweiten Lagerblocks 8 in Richtung der negativen X-Achse erfolgt eine ausgleichende Rotation durch den Stab 11. Da nur ein Rotationspunkt vorhanden ist, nämlich der Kreismittelpunkt 100a des ersten Kreisbogens 12, verbleibt der erste Lagerblock 7 in seiner Stellung und wird nicht bewegt. Somit findet insbesondere keine Entspannung des ersten Federenergiespeichers 2 statt. Gleichzeitig ist jedoch wiederum ein Lüftspiel ausgleichbar.

Die Fig. 5 zeigt eine Bremsanordnung 36, die eine Kraftübertragungsvorrichtung 1 wie zuvor beschrieben umfasst. Die Kraftübertragungsvorrichtung 1 weist zusätzlich einen Aktuator 42 auf, der mit dem zweiten Lagerblock 8 gekoppelt ist, um eine externe Kraft auf die Kraftübertragungsvorrichtung 1 aufzubringen.

Die Bremsanordnung 36 umfasst eine Bremseinrichtung 37, die zwei Bremsbacken 38 und eine Bremsscheibe 39 umfasst. Durch die Bremsbacken 38 ist die Bremsscheibe 39 bremsbar. Zumindest eine der Bremsbacken 38 ist über die Kraftübertragungsvorrichtung 1 aktuierbar.

Zwischen der Kraftübertragungsvorrichtung 1 und der Bremseinrichtung 37 ist ein Hebelelement 32 angebracht. Das Hebelelement 32 weist einen ersten Anschluss 33 und einen zweiten Anschluss 34 sowie einen Lagerpunkt 35 auf. Es ist vorgesehen, dass der zweite Lagerblock 8 der Kraftübertragungsvorrichtung 1 über ein erstes Drehschubgelenk 40, das insbesondere ein leichtgängiges Drehschubgelenk ist, an den ersten Anschluss 33 des Hebelelements 32 gekoppelt ist. Die Bremseinrichtung 36 ist über ein zweites Drehschubgelenk 41 mit dem zweiten Anschluss 34 des Hebelelements 32 gekoppelt.

Es ist vorgesehen, dass der Lagerpunkt 35 des Hebelelements 32 verschiebbar ist. Daher ist das Übersetzungsverhältnis der Kraftübertragungsvorrichtung 1 und der Bremseinrichtung 37 ermöglicht. Durch die Anbindung der Kraftübertragungsvorrichtung 1 und der Bremseinrichtung 37 über das erste Drehschubgelenk 40 und das zweite Drehschubgelenk 41 ist ein Verschieben des Hebelelements 32 problemlos ermöglicht.

Bevorzugt ist außerdem eine Verschleißnachstellung 43 vorgesehen, da sich Bremsbeläge der Bremsbacken 38 und die Bremsscheibe 39 abnutzen, d.h. dünner werden. Damit ein konstantes Lüftspiel vorhanden ist, erfolgt bevorzugt ein Nachstellen durch die Verschleißnachstellung 43. Somit kann insbesondere sichergestellt werden, dass sich das Lüfspiel rechts vom der senkrechten Position des Stabes 11 befindet. Durch den Verschleiß bewegt sich diese Position nach links, der Stab 11 muss somit mehr gedreht werden, bis die Bremsbeläge anliegen. Dadurch entsteht ein Bereich in dem weder der zweite Federenergiespeicher 3 noch der dritte Federenergiespeicher 24 dem ersten Federenergiespeicher 2 entgegenwirken kann. Dadurch ist der Arbeitsaustausch nicht mehr vollständig gewährleistet. Ein solcher Zustand ist insbesondere durch die Verschleißnachstellung 43 verhinderbar, die für alle Verschleißzustände für ein konstantes Lüftspiel einstellt.

Bevorzugt ist außerdem eine Steifigkeitseinstellung 44 vorhanden, die insbesondere wegen der verstellbaren Hebelübersetzung, d.h. der Verschiebung des Lagerpunkts 35 des Hebelelements 32, vorteilhaft ist. Diese Steifigkeitseinstellung 44 dient dazu, vorhandene Steifigkeitsänderungen auszugleichen und immer einen vollständigen Arbeitsaustausch zu gewährleisten. Mit der Steifigkeitseinstellung 44 kann $c_2$ konstant gehalten werden, obwohl sich die anderen Steifigkeiten ändern. Insbesondere durch den Verschleiß der Bremsbeläge der Bremsbacken 38 ändert sich deren Steifigkeit. Bei einer starken Erwärmung der Bauteile, beispielsweise nach mehreren Bremsungen innerhalb einer kurzen Zeit, ändert sich die Steifigkeit aller Bauteile. Wegen Fertigungstoleranzen schwanken alle Steifigkeiten in einem gewissen Bereich.

Die Einstellung der Steifigkeit mittels der Steifigkeitseinstellung 44 und die Nachstellung aufgrund Verschleißes mittels der Verschleißnachstellung 44 können insbesondere zwischen den Bremsvorgängen erfolgen, wenn die Bremsbeläge lastfrei sind.

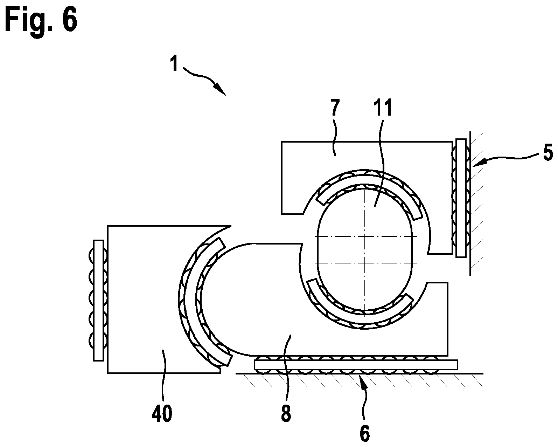

Fig. 6 zeigt eine alternative Ausgestaltung des ersten Drehschubgelenks 40.

Fig. 7 zeigt eine Bremsanordnung 36 gemäß einem zweiten Ausführungsbeispiel der Erfindung. Im Unterschied zum ersten Ausführungsbeispiel, in dem der Lagerpunkt 35 zwischen dem ersten Anschluss 33 und dem zweiten Anschluss 34 liegt, befinden sich der Lagerpunkts 35 nicht zwischen dem ersten Anschluss 33 und dem zweiten Anschluss 34. Die Hebelarme vom ersten Anschluss 33 zum Lagerpunkt 35 und vom zweiten Anschluss 34 zum Lagerpunkt 35 erstrecken sich damit in dieselbe Richtung, während diese Richtungen in dem ersten Ausführungsbeispiel entgegengesetzt sind. Außerdem ist im ersten Ausführungsbeispiel vorgesehen, dass der erste Anschluss 33 und der zweite Anschluss 34 auf derselben Seite des Hebelelements 32 angeordnet sind. Dahingegen sind erster Anschluss 33 und zweiter Anschluss 34 im zweiten Ausführungsbeispiel auf unterschiedlichen Seiten des Hebelelements 32 angebracht.

Erfolgt ein Verschieben des Lagerpunkts 35, so ist dies unabhängig von einer aktuellen Stellung des Hebelelements 32. Durch das erste Drehschubgelenk 40 und das zweite Drehschubgelenk 41 ist ein Verschieben des Lagerpunkts 35 unabhängig von der aktuellen Stellung des Hebelelements 32 ermöglicht. Somit kann die Übersetzung der Bewegung zwischen Kraftübertragungsvorrichtung 1 und Bremseinrichtung 37 jederzeit angepasst werden.

Neben der vorstehenden schriftlichen Beschreibung der Erfindung wird zu deren ergänzender Offenbarung hiermit explizit auf die zeichnerische Darstellung der Erfindung in den Fig. 1 bis 7 Bezug genommen.

**Bezugszeichenliste**

1    Kraftübertragungsvorrichtung
2    erster Federenergiespeicher
3    zweiter Federenergiespeicher
4    Koppeleinheit
5    erste Führung
6    zweite Führung
7    erster Lagerblock
8    zweiter Lagerblock
9    erste Aufnahme
10    zweite Aufnahme
11    Stab

| 12 | erster Kreisbogen |
| 13 | zweiter Kreisbogen |
| 14 | erste Wälzkörperanordnung |
| 15 | zweite Wälzkörperanordnung |
| 16 | dritte Wälzkörperanordnung |
| 17 | vierte Wälzkörperanordnung |
| 18 | erste Außenwand |
| 19 | zweite Außenwand |
| 20 | dritte Außenwand |
| 21 | vierte Außenwand |
| 22 | erste Führungsleiste |
| 23 | zweite Führungsleiste |
| 24 | dritter Federenergiespeicher |
| 25 | Scheibenelement |
| 26 | Stirnseite des Stabs |
| 27 | Schulter des zweiten Lagerblocks |
| 28 | Außenfläche des Scheibenelements |
| 29 | erste Kreisbogenkontur |
| 30 | zweite Kreisbogenkontur |
| 31 | Übergangspunkt |
| 32 | Hebelelement |
| 33 | erster Anschluss des Hebelelements |
| 34 | zweiter Anschluss des Hebelelements |
| 35 | Lagerpunkt des Hebelelements |
| 36 | Bremsanordnung |
| 37 | Bremseinrichtung |
| 38 | Bremsbacke |
| 39 | Bremsscheibe |
| 40 | erstes Drehschubgelenk |
| 41 | zweites Drehschubgelenk |
| 42 | Aktuator |
| 43 | Verschleißnachstellung |
| 44 | Steifigkeitseinstellung |
| 100a | Kreismittelpunkt des ersten Kreisbogens |
| 100b | Kreismittelpunkt des zweiten Kreisbogens |

**Patentansprüche**

1.  Kraftübertragungsvorrichtung (1) aufweisend

    • einen ersten Federenergiespeicher (2) und einen zweiten Federenergiespeicher (3),
    • eine Koppeleinheit (4), die sowohl an den ersten Federenergiespeicher (2) und an den zweiten Federenergiespeicher (3) angebunden ist,
    • wobei die Koppeleinheit (4) an eine erste Führung (5) und an eine zweite Führung (6) gekoppelt ist,
    • wobei die erste Führung (5) und die zweite Führung (6) innerhalb jeweils einer Ebene angeordnet sind und nichtparallele Erstreckungsrichtungen aufweisen,
    **dadurch gekennzeichnet, dass**
    • die Koppeleinheit (4) einen ersten Lagerblock (7) mit einer ersten Aufnahme (9) aufweist, in der ein Stab (11) der Koppeleinheit (4) gelagert ist,
    • die Koppeleinheit (4) einen zweiten Lagerblock (8) mit einer zweiten Aufnahme (10) aufweist, in der der Stab (11) gelagert ist,
    • die erste Aufnahme (9) und die zweite Aufnahme (10) eine kreisbogenförmige Kontur aufweisen, und
    • eine Kontur des Stabs (11) einen ersten Kreisbogen (12) und einen zweiten Kreisbogen (13) aufweist, wobei der erste Kreisbogen (12) und der zweite Kreisbogen (13) verschiedene Kreismittelpunkte (100a, 100b) aufweisen.

**2.** Kraftübertragungsvorrichtung (1) nach Anspruch 1, **dadurch gekennzeichnet, dass** der Stab (11) an dem Bereich der Kontur mit dem ersten Kreisbogen (12) in der ersten Aufnahme (9), insbesondere über eine erste Wälzkörperanordnung (14), gelagert ist, und/oder der Stab (11) an dem Bereich mit der Kontur mit dem zweiten Kreisbogen (13) in der zweiten Aufnahme (10), insbesondere über eine zweite Wälzkörperanordnung (15), gelagert ist.

**3.** Kraftübertragungsvorrichtung (1) nach einem der vorhergehenden Ansprüche, **dadurch gekennzeichnet, dass** eine erste Außenwand (18) des ersten Lagerblock (7) mit dem ersten Federenergiespeicher (2) gekoppelt ist und/oder eine zweite Außenwand (19) des zweiten Lagerblock (8) mit dem zweiten Federenergiespeicher (3) gekoppelt ist.

**4.** Kraftübertragungsvorrichtung (1) nach Anspruch 3, **dadurch gekennzeichnet, dass** die erste Führung (5) eine erste Führungsleiste (22) zum Lagern, insbesondere über eine dritte Wälzkörperanordnung (16), einer dritten Außenwand (20) des ersten Lagerblocks (7) aufweist, und/oder die zweite Führung (6) eine zweite Führungsleiste (23) zum Lagern, insbesondere über eine vierte Wälzkörperanordnung (17), einer vierten Außenwand (21) des zweiten Lagerblocks (8) aufweist.

**5.** Kraftübertragungsvorrichtung (1) nach einem der vorhergehenden Ansprüche, **gekennzeichnet durch** einen dritten Federenergiespeicher (24), der mit der Koppeleinheit (4) gekoppelt ist und dem zweiten Federenergiespeicher (3) entgegenwirkt oder mit dem zweiten Federenergiespeicher (3) zusammenwirkt.

**6.** Kraftübertragungsvorrichtung (1) nach einem der vorhergehenden Ansprüche, **gekennzeichnet durch** zumindest ein Scheibenelement (25), das drehfest an einer Stirnseite (26) des Stabs (11) angebracht ist und über eine Außenfläche (28) mit einer Schulter (27) des zweiten Lagerblocks (8) zusammenwirkt, wobei die Außenfläche (28) eine erste Kreisbogenkontur (29) mit demselben Kreismittelpunkt (100a) wie der erste Kreisbogen (12) aufweist, die an einem Übergangspunkt (31) in eine zweite Kreisbogenkontur (30) übergeht, wobei die Außenfläche (28) über die erste Kreisbogenkontur (29) an die Schulter (27) anlegbar und durch die zweite Kreisbogenkontur (29) von der Schulter (27) trennbar ist, und wobei der Übergangspunkt (31) in Kontakt mit der Schulter (27) gelangt, wenn der erste Federenergiespeicher (2) maximal gespannt ist.

**7.** Kraftübertragungsvorrichtung (1) nach einem der vorhergehenden Ansprüche, **dadurch gekennzeichnet, dass** der zweite Lagerblock (8) über ein erstes Drehschubgelenk (40) mit einem ersten Anschluss (33) eines Hebelement (32) gekoppelt ist, wobei eine Bremseinrichtung (36) über ein zweites Drehschubgelenk (41) mit einem zweiten Anschluss (34) des Hebelements (32) koppelbar ist, und wobei ein Lagerpunkt (35) des Hebelements (32) entlang des Hebelements (32) verstellbar ist.

**8.** Kraftübertragungsvorrichtung (1) nach Anspruch 7, **dadurch gekennzeichnet, dass** der erste Anschluss (33) und der zweite Anschluss (34) auf unterschiedlichen Seiten des Hebelements (32) und der Lagerpunkt (35) zwischen dem ersten Anschluss (32) und dem zweiten Anschluss (33) angebracht sind, oder der erste Anschluss (33) und der zweite Anschluss (34) auf einer gleichen Seiten des Hebelements (32) und auf einer gleichen Seite hinsichtlich des Lagerpunkts (35) angebracht sind.

**9.** Kraftübertragungsvorrichtung (1) nach einem der vorhergehenden Ansprüche, **gekennzeichnet durch** einen Aktuator (42) zum Bewegen der Koppeleinheit (4), wobei der Aktuator (42) insbesondere mit dem zweiten Lagerblock (8) gekoppelt ist.

**10.** Bremsanordnung (36) umfassend eine Bremseinrichtung (37), insbesondere eine Scheibenbremse, welche durch Aufprägen einer Kraft betreibbar ist und eine Kraftübertragungsvorrichtung (1) nach einem der vorhergehenden Ansprüche, wobei die Bremseinrichtung (36) mit dem zweiten Lagerblock (8) gekoppelt ist.

## Fig. 1

## Fig. 2a

**Fig. 2b**  **Fig. 2c**  **Fig. 2d**

EP 3 581 447 A1

# Fig. 3

EP 3 581 447 A1

# Fig. 4a

# Fig. 4b

# Fig. 4c

EP 3 581 447 A1

# Fig. 5

$c'_2$

$c''_2$

EP 3 581 447 A1

# Fig. 6

Fig. 7

**Europäisches Patentamt**
**European Patent Office**
**Office européen des brevets**

# EUROPÄISCHER RECHERCHENBERICHT

**Nummer der Anmeldung**

EP 19 18 0050

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2015 219626 A1 (HOCHSCHULE FÜR ANGEWANDTE WSS MÜNCHEN [DE]) 13. April 2017 (2017-04-13) | 1-5,7-10 | INV. B60T13/04 B60T13/74 F16D65/18 |
| A | * Zusammenfassung * * Absatz [0010]; Abbildungen 1, 2B, 2C, 5, 7 * ----- | 6 | |
| A | US 5 697 474 A (ANTONY PAUL [DE] ET AL) 16. Dezember 1997 (1997-12-16) * Abbildungen 5b, 6b * ----- | 1 | |
| A | DE 196 27 646 A1 (LUCAS IND PLC [GB]) 29. Januar 1998 (1998-01-29) * Abbildung 5 * ----- | 1 | |
| A | US 4 681 194 A (TSURUTA MATSUHISA [JP]) 21. Juli 1987 (1987-07-21) * Abbildung 1 * ----- | 1 | |

**RECHERCHIERTE SACHGEBIETE (IPC)**

B60T
F16D

Der vorliegende Recherchenbericht wurde für alle Patentansprüche erstellt

| Recherchenort | Abschlußdatum der Recherche | Prüfer |
|---|---|---|
| München | 24. September 2019 | Kirov, Youlian |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 18 0050

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-09-2019

| Im Recherchenbericht angeführtes Patentdokument | Datum der Veröffentlichung | Mitglied(er) der Patentfamilie | Datum der Veröffentlichung |
|---|---|---|---|
| DE 102015219626 A1 | 13-04-2017 | DE 102015219626 A1<br>EP 3359428 A1<br>WO 2017060282 A1 | 13-04-2017<br>15-08-2018<br>13-04-2017 |
| US 5697474 A | 16-12-1997 | BR 9602037 A<br>DE 19515019 A1<br>EP 0740085 A1<br>US 5697474 A | 06-10-1998<br>31-10-1996<br>30-10-1996<br>16-12-1997 |
| DE 19627646 A1 | 29-01-1998 | DE 19627646 A1<br>EP 0910754 A1<br>ES 2212118 T3<br>JP 2000514533 A<br>KR 20000023676 A<br>US 6412608 B1<br>WO 9801682 A1 | 29-01-1998<br>28-04-1999<br>16-07-2004<br>31-10-2000<br>25-04-2000<br>02-07-2002<br>15-01-1998 |
| US 4681194 A | 21-07-1987 | DE 3610526 A1<br>FR 2579705 A1<br>GB 2173873 A<br>JP H0346264 Y2<br>JP S61161442 U<br>US 4681194 A | 30-10-1986<br>03-10-1986<br>22-10-1986<br>30-09-1991<br>06-10-1986<br>21-07-1987 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015219626 A1
- EP 0644358 B1
- WO 200144677 A1